# EUROPEAN PATENT APPLICATION

(11) **EP 2 248 766 A1**
(43) Date of publication of application: **10.11.2010**
(21) Application number: 08870675.9
(22) Date of filing: 20.10.2008
(51) Int. Cl.: C02F 1/04, B01D 1/16, B01D 5/00, C02F 1/14

(54) **ENERGY SAVING FRESH WATER PRODUCTION EQUIPMENT**

(30) Priority: 18.01.2008 JP 2008008761
(71) Applicant: Electra Holdings Co., Ltd., Chiyoda-ku Tokyo 100-0006 (JP)
(72) Inventor: YABE, Takashi, Tokyo 114-0013 (JP); SATOH, Yuji, Tokyo 142-0041 (JP)
(74) Representative: Skone James, Robert Edmund
(86) International application number: PCT/JP2008/068930
(87) International publication number: WO 2009/090785

(57) **Abstract**

[OBJECT]

It is an object of the present invention to provide an energy-saving freshwater producing apparatus having a simple apparatus configuration.

[SOLUTION]

Seawater is heated by a heat-collecting device based on solar light, and the heated seawater is injected to one or more mist-forming structure formed as a rotor comprising a plurality of collision members formed to extend radially, to form a mist. Water vapor generated from the formed mist is introduced to a heat exchanger arranged in a side-by-side relation to the mist-forming structure in a horizontal direction through a demister, while being carried on an airstream by an airstream-forming device. Low-temperature seawater flows through the heat exchanger vertically from a lower side to an upper side thereof. The introduced water vapor is condensed into freshwater by cold energy of the seawater, and the freshwater is collected.

## Description

### TECHNICAL FIELD

The present invention relates to an apparatus for producing freshwater based on an evaporation (distillation) process, and more specifically to an energy-saving type apparatus for producing freshwater with a simple apparatus configuration.

### BACKGROUND ART

Currently, the world is in a situation where 1.1 billion people cannot sufficiently use water, and it is estimated that water for 3 billion people will become deficient, in 2025. In view of the circumstance, extensive efforts have been made for developing technologies for obtaining freshwater from seawater, and two significant processes have been brought into practical use, particularly in recent years, one being a reverse osmosis membrane process which is a process of filtering seawater to produce freshwater, and the other being an evaporation process which is a process of distilling seawater to produce freshwater.

JP 2007-309295A (Patent Document 1) discloses a freshwater producing apparatus based on the reverse osmosis membrane process. The reverse osmosis membrane process is designed to use a semipermeable membrane for preliminarily removing fine particles in seawater by filtration, wherein a pressure equal to or greater than the osmotic pressure is applied to a seawater side of the membrane to extract freshwater. However, the process has a problem in that excessive power or energy is required to pressurize seawater to be treated to a pressure above an osmotic pressure.

JP 2006-70889A (Patent Document 2) and JP 2004-136273A (Patent Document 3) disclose a freshwater producing apparatus based on a multi-stage flash evaporation process. The multi-stage flash evaporation process has problems in that it requires a plurality of decompression chambers so that the apparatus becomes inevitably complicated in structure and larger in size, and in addition, it has a further problem in that, since an excessively large amount of energy is still required for evaporation of seawater, there is no choice but to install the freshwater producing apparatus beside a thermal power plant or the like to use exhaust heat thereof, so that there has been restriction in the place of locating the apparatus.

Further, there is another type of freshwater producing apparatus based on a spray flash evaporation process has been know by being disclosed in JP 9-52082A, however, this type of apparatus has a problem in that scale components contained in seawater are liable to be clogged in a spray nozzle causing an excessive increase in maintenance cost of the apparatus.

As a prerequisite measure for coping with the global water crisis in the future, it is necessary to install a larger number of freshwater producing apparatuses in various locations throughout the world. For this reason, it has been desired to create an energy-saving type freshwater producing apparatus capable of reducing an installation cost and a maintenance cost per freshwater producing apparatus, while allowing an installation location thereof to be freely selected without depending on existing heat sources, and capable of being operated based on natural energy such as solar light energy.
Patent Document 1: JP 2007-309295A
Patent Document 2: JP 2006-70889A
Patent Document 3: JP 2004-136273A
Patent Document 4: JP 9-52082A

### DISCLOSURE OF THE INVENTION

### [PROBLEM TO BE SOLVED BY THE INVENTION]

The present invention has been made in view of the problems in the aforementioned conventional techniques, and it is an object of the present invention to provide an energy-saving type apparatus for producing freshwater with a simple configuration.

### [MEANS FOR SOLVING THE PROBLEM]

As a result of extensive studies on an energy-saving type freshwater producing apparatus having a simple apparatus configuration, the inventors have conceived the following novel configuration, and have accomplished the present invention. Specifically, raw water which is the subject of treatment is heated by any appropriate manner, such as by applying for example solar light which is a typical natural energy, and the heated raw water is injected from a nozzle arrangement to a mist-forming structure while operating the mist-forming structure. Through this process, the raw water is divided into a state of mist of fine particle size water, whereby the raw water acquires an increased contact area with air, so that evaporation efficiency is enhanced. Water vapor generated in this manner is moved to pass through a demister by being conveyed with gas stream induced by the mist-forming structure or by the flow of mist itself, to be introduced into a heat exchanger, where the water vapor is cooled down to the saturation temperature to be condensed, and the condensed water is collected by a freshwater collecting device to obtain freshwater. In this instance, the latent heat of condensation is applied to the heat exchanger which cooled by the raw water to thereby increase a temperature of the raw water. The heated raw water is again used for producing mist in a next cycle, so that the latent heat of water can be collected in the form of a latent heat of condensation.

More specifically, according to the present invention, there is provided an energy recirculation type freshwater producing apparatus which utilizes a mist-forming blower (mist-forming structure) and a heat exchanger, wherein the blower is caused to be rotated with the seawater which is preliminarily heated by solar light energy or any other means, simultaneously transforming the seawater into the state of mist of fine particle size to cause water to vaporize, and wherein the resulting water vapor is introduced into the heat exchanger under the influence of the blower or the mist flow, the apparatus further comprising a collecting device wherein the water vapor is cooled down to the saturation temperature and condensed in the heat exchanger which is cooled by seawater, and the resulting freshwater is collected, the seawater being in turn heated by the latent heat of condensation and transformed into the state of mist. The freshwater producing apparatus in accordance with the present invention comprises a mist scattering-preventing partition wall having a high percentages of openings and operable to separate the water vapor flow from the mist-state seawater formed by the mist-forming blower. Further, the mist-forming blower functions to transform the raw water into small particles of fine particle size, and at the same time to induce a movement in the surrounding air in the direction perpendicular to the rotation axis of the blower, the air flow thus produced serving to direct the resulting water vapor toward the heat exchanger without any external power. In order to utilize the mist movement in the direction perpendicular to the rotation axis of the mist-forming blower to form an airstream, the freshwater producing apparatus of the present invention may comprise a reflecting plate provided at a portion of the apparatus and adapted to scatter the mist at a specific angle to form an airstream in the direction corresponding to the specific angle, and evaporate the atomized raw water by the kinetic energy of the scattered mist. In the freshwater producing apparatus of the present invention, it may be possible to provide a mist-forming section (evaporation section) and a heat exchanger section in an integrated configuration, to thereby provide a structure and mechanism which may allow the formed mist to be circulated with less resistance. For example, in order to have the air circulated between the mist-forming section and the heat exchanger section which are integrated together, without any significant resistance, the freshwater producing apparatus may be configured such that it is generally formed in a cylindrical shape having a cross-section close to a circle, and the mist-forming section and the heat exchanger section are arranged in a circumferential direction thereof. In accordance with the present invention, a plurality of mist-forming blowers may be arranged in series or in parallel, and each of the mist-forming blowers may be formed in a fractal structure to transform the seawater into mist-state seawater having a fine particle size. In order to increase the rate of water collection, the freshwater producing apparatus of the present invention has a structure which allows a multi-stage or continuous infinite-stage arrangement. In such a configuration, a plurality of mist-forming blowers may be coaxially arranged on a rotary shaft of the blowers in the mist-forming section to allow all the multi-stage blowers to play both roles of airstream formation and mist formation. The freshwater producing apparatus of the present invention can be readily expanded to a multi-stage system by simply stacking a plurality of similar apparatus, wherein a plurality of the mist-forming blowers may be extended in the vertical direction, and the portion of the raw water which has not been transformed into mist in an upper one of the blowers is introduced to a lower one of the blowers to repeatedly divide the raw water into mist by the lower blower. Mist generated at each of the respective blowers in the above process is collected into a layer of swirl in the circumferential direction. Each of the layers functions as the apparatus in an independent stage. The number of layers can be increased to reduce external heating energy in inverse proportion to the number, so that a low-cost and efficient freshwater producing apparatus is provided.

### [EFFECT OF THE INVENTION]

As described above, the present invention can provide an energy-saving type freshwater producing apparatus with a simple apparatus configuration.

### BEST MODE FOR CARRYING OUT THE INVENTION

The present invention will now be described based on an embodiment illustrated in the drawings. It should however be understood that the present invention is not limited to the embodiment illustrated in the drawings.

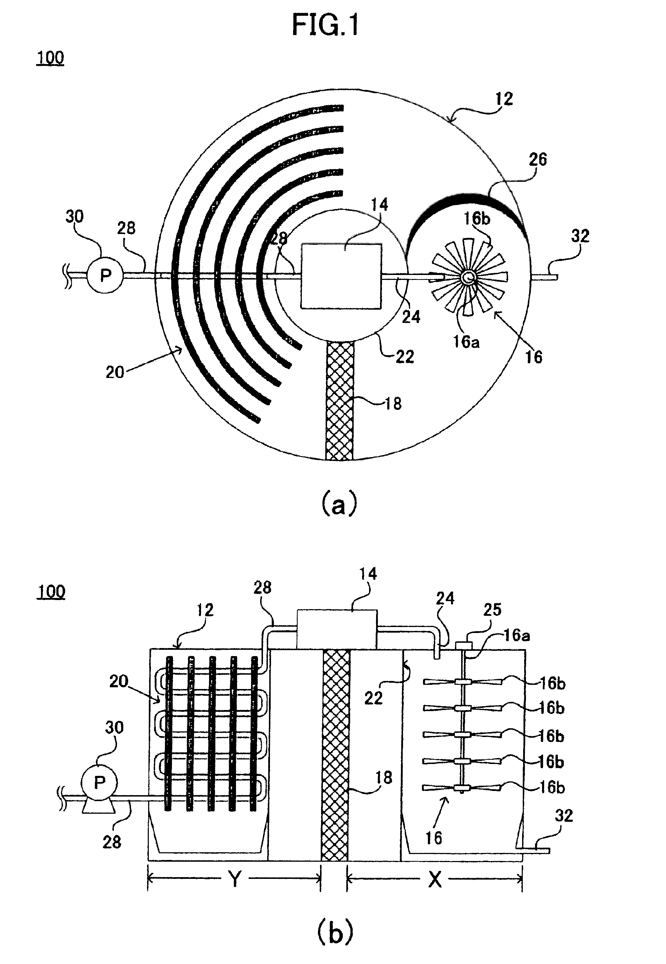

FIG. 1 illustrates a freshwater producing apparatus 100 according to a first embodiment of the present invention, wherein FIG. 1(a) and FIG. 1(b) are a top transparent view and a side transparent view of the freshwater producing apparatus 100, respectively.

As shown in FIG. 1, the freshwater producing apparatus 100 according to the first embodiment comprises a generally cylindrically-shaped housing 12 provided to stand in a vertical direction, a heating device 14 installed on the top of the housing 12, a mist-forming structure 16, a demister 18, and a radiator 20. A doughnut-shaped space is defined inside the housing 12 by an inner wall surface of the housing 12 and an outer peripheral surface of a columnar-shaped pillar. The space is divided by the demister 18 in two regions in a circumferential direction. Specifically, there are arranged in side-by-side relation in a horizontal direction through the demister 18 an evaporation section X for evaporating water contained in the raw water which is the subject to be treated, and a condensation section Y for condensing water vapor generated in the evaporation section X to collect freshwater,. The following description will be made based on an example where seawater is used as the raw water to be treated.

In the freshwater producing apparatus 100 according to the first embodiment, seawater heated by the heating device 14 is introduced from a nozzle 24 into the evaporation section X. The mist-forming structure 16 is provided on a vertically downward side of the nozzle 24 to pulverize the introduced seawater to form a group of droplets of fine particle size (hereinafter referred as "mist"). In the first embodiment, the introduction of seawater from the nozzle 24 to the mist-forming structure 16 may be achieved by means of free fall (gravitational fall), or may be achieved by means of injection using any pressurization means. Further, in the first embodiment, arrangements are adopted for forming the mist by the mist-forming structure 16b described in detail later, so that the nozzle 24 should not necessarily be of a small diameter as in a spray nozzle typically used in the conventional spray flash evaporation process, and thereby the nozzle 24 can be designed to have a size (several mm to several cm) enough to prevent clogging by scale components contained in the seawater. The nozzle 24 designed in this manner allows the maintenance cost to be reduced to a noticeable extent.

The mist-forming structure 16 comprises a rotary shaft 16a extending from the top of the housing 12 in a vertically downward direction, and a plurality of rotors each comprising a plurality of radially extending blades 16b. The plurality of rotors are attached to the rotary shaft 16a with axial spacing therebetween. There is provided a rotational driving source 25 which is connected with the rotary shaft 16a to be driven thereby, whereby the plurality of rotors are rotationally driven at a high speed by the rotational driving source 25.

Further, there is provided airstream-forming means in the evaporation section X to form a flow of air for carrying water vapor generated through evaporation of the mist formed by the mist-fonning structure 14, to the condensation section Y. In the embodiment illustrated in FIG. 1, the mist-forming structure 16 and a reflecting plate 26 disposed adjacent to the mist-forming structure 16 constitute the airstream-forming means. This feature will be more specifically described later.

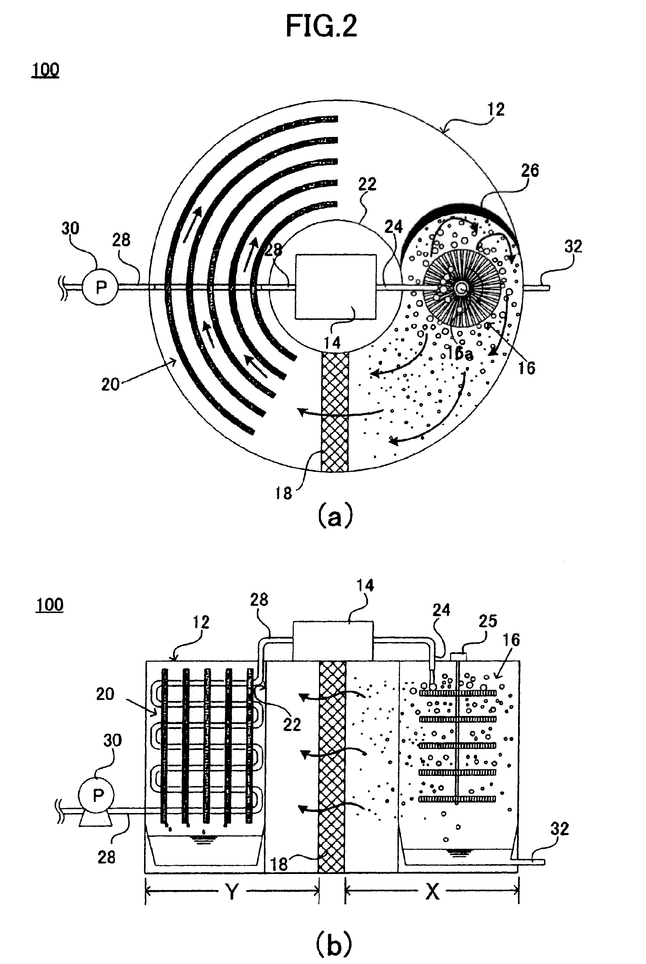

On the other hand, the radiator 20 serving as a heat exchanger is provided in the condensation section Y, and low-temperature seawater pumped up from the sea is forcedly sent to the radiator 20 by a pumping device 30. The radiator 20 has a pipe 28 arranged therein to extend vertically from a lower side to an upper side thereof through a plurality of radiation fins. A portion of the pipe 28 extending outside the radiator 28 is connected to the heating device 14. As above, the physical configuration of the freshwater producing apparatus 100 according to the first embodiment has been generally described. Secondly, with reference to FIG. 2, a mechanism for producing freshwater in the freshwater producing apparatus 100 according to the first embodiment will be described.

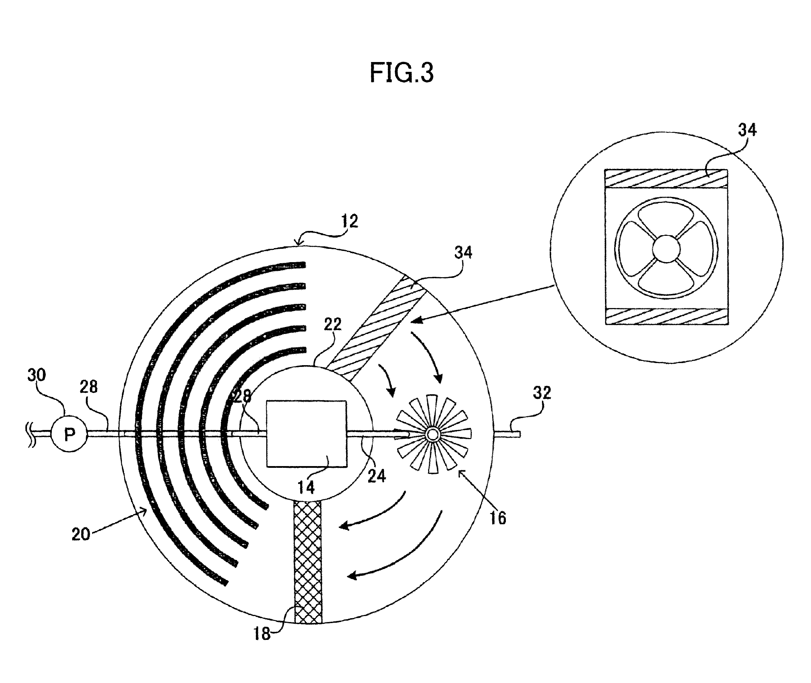

FIG. 2 conceptually illustrates the mechanism for producing freshwater in the freshwater producing apparatus 100, wherein FIG. 2(a) and FIG. 2(b) are a top transparent view and a side transparent view of the freshwater producing apparatus 100, respectively. In FIG. 2, elements or components corresponding to those in FIG. 1 are designated by the same reference chracters or numerals, and its description will be omitted (the same applies to FIGS. 3 to 9).

Firstly, seawater is pumped up and introduced into the radiator 20 via the pipe 28 by the pumping device 30. In this process, it is preferable that a temperature of seawater to be introduced is as lower as possible, and therefore, it is preferable to pump up and introduce low-temperature seawater from deep sea. In the course of forcedly sending seawater through the pipe 28 arranged inside the radiator 20 to extend in a vertically upward direction, the seawater is carried in the vertically upward direction, while being gradually increase in temperature by conducting a heat exchange with the water vapor contained in air within the condensation section Y, through the radiation fins of the radiator 20, and introduced into the heating device 14 provided on the top of the housing 12. The configuration of the radiator 20 in FIG. 1 is conceptually illustrated, and the heat exchanger in the present invention is not limited to such a configuration.

The seawater introduced in the heating device 14 is heated up to a given temperature, and then injected from the nozzle 24 toward the mist-forming structure 16 located on the vertically downward side of the nozzle 24. The heating device 14 is not required to heat the seawater up to a boiling point but up to only about 70 to 90°C. While the present invention is not intended to particularly limit the heating device 14, a heat-collecting device based on solar light is preferably used in view of a reduction in energy cost. Further, the rotational driving source 25 may be comprised of a conventional mechanism for converting light energy and heat energy of solar light to a rotational movement.

The seawater introduced into the mist-forming structure 16 collides with the blades 16b of the rotors rotated at high speed by the rotational driving source 25, and thereby a part of the seawater is pulverized by collision impact. Then, the pulverized seawater is further fragmented by an airstream pressure in a course of scattering by a centrifugal force, so that it is formed into fine water droplets, and the water droplets are spread over an air within the evaporation section X. A part of the spread mist is naturally evaporated into water vapor during floating within the evaporation section X of the housing 12. On the other hand, the portion of the mist which has not been evaporated and the portion of the seawater which has not been transformed into mist are discharged through a water discharge pipe 32 to the exterior of the housing 12, after directly falling in the vertically downward direction and reaching a bottom of the evaporation section X.

The water vapor generated in the evaporation section X is carried in the airstream formed by the airstream-forming means, into the condensation section Y. The operation will be described with reference to FIG. 2(a). As shown in FIG. 2(a), a reflecting plate 26 formed in a generally arc shape in horizontal section is arranged adjacent to the mist-forming structure 16. Mist scattered from the mist-forming structure 16 is isotropically moved in a plane perpendicular to the rotary shaft 16a, and a part of the scattered mist is blocked by the reflecting plate 26, so that a mist flow is formed in a reflection direction of the reflecting plate 26. This mist flow induces a flow of air, and thereby an airstream directed from the evaporation section X to the condensation section Y is generated. The water vapor generated in the evaporation section X is carried in this airstream into the condensation section Y.

In the embodiment illustrated in FIG. 2(a), the mist-forming structure 16 and the reflecting plate 26 disposed adjacent to the mist-forming structure 16 function as the airstream-forming means, which is advantageous in that there is no need for additional energy for airstream formation. However, the present invention is not intended to be limit to the airstream-forming means of the above configuration, but a circumferential airstream directed from the evaporation section X to the condensation section Y may be forcibly formed by providing an air blower 34 behind the mist-forming structure 16. In the freshwater producing apparatus 100 according to the first embodiment, the housing 12 is formed in a cylindrical shape, which makes it possible to facilitate formation of a smooth airstream directed from the evaporation section X to the condensation section Y to significantly save energy required for the airstream formation.

The water vapor generated in the evaporation section X is passed through the demister 18 and introduced into the condensation section Y together with the air stream formed by the airstream-forming means. The mist component contained in this airstream is trapped by the demister 10 and thereby prevented from entering into the evaporation section X. In the first embodiment, the evaporation of the mist can be further enhanced, for example, by heating the demister 18 using heat generated by the heating device 14.

When the water vapor introduced in the condensation section Y passes through spacings between respective ones of the radiation fins of the radiator 20, it is condensed and liquidized through the heat exchange with seawater flowing through the pipe 28, via the radiation fins. Freshwater produced in the above manner falls along wall surfaces of the radiation fins in the vertically downward direction, and is finally accumulated on a bottom of the condensation section Y.

As described above, in the freshwater producing apparatus of the present invention, high-temperature seawater is firstly atomized into mist in the evaporation section X to generate water vapor from the seawater with enhanced evaporation efficiency. Then, the water vapor is moved to the condensation section Y together with the airstream formed by the airstream-forming means. The water vapor-containing air moved to the condensation section Y is cooled by cold temperature of the seawater, and thereby moisture with a concentration exceeding the saturation value is condensed and liquidized.

The configuration of the mist-forming structure 16 illustrated in FIG. 1 is shown simply by way of example. The mist-forming structure in the present invention is not limited to the aforementioned configuration, but it is preferable to optimize the configuration of the mist-forming structure so as to efficiently pulverize and convert seawater into water droplets having a fine particle size. For example, each of the blades of the rotors of the mist-forming structure 16 may be formed as a fractal type, and each of the rotors may be formed as a wind mill or water mill type. Further, the rotor of the mist-forming structure may be formed in a turbine-like shape, in such a manner that it is rotated by dynamic pressure of seawater introduced thereto. In this case, the rotational driving source for the mist-forming structure may be omitted.

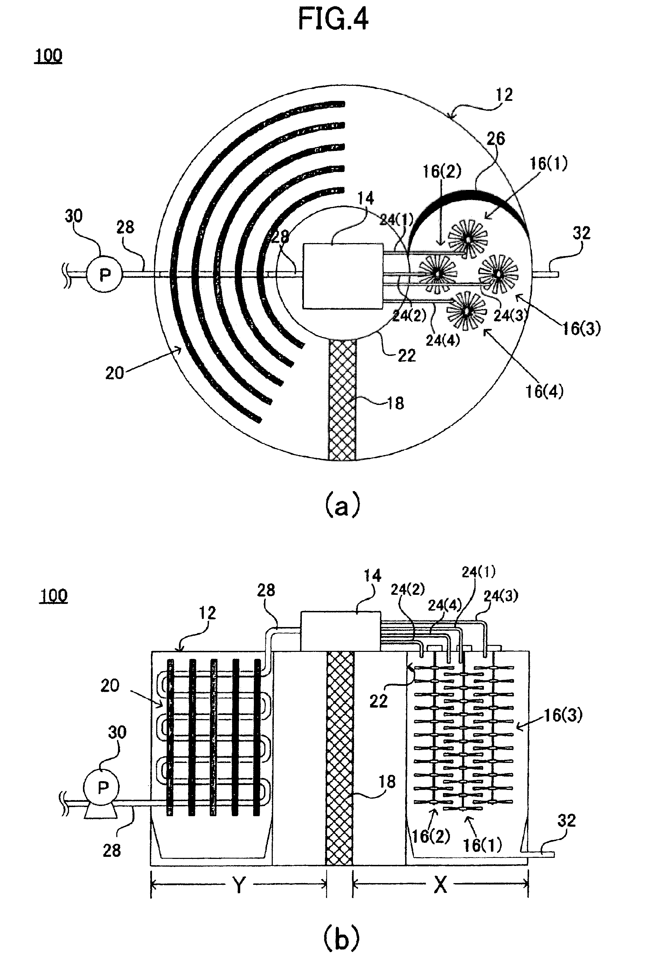

It is preferable to optimize the mist-forming structure in terms of the number and the size. For example, in case where a large amount of seawater is to be treated, it is possible to atomize the seawater into mist more efficiently by distributing the seawater to a plurality of nozzles so that the seawater is introduced at a smaller flow rate to respective ones of a plurality of mist-forming structure each having a smaller size, rather than to introduce the seawater through a single large-diameter nozzle at a large flow rate to a single large mist-forming structure. In this connection, FIG. 4 shows one modification of the freshwater producing apparatus 100, which comprises a plurality of mist-forming structure 16(1) to 16(4). In the modified embodiment illustrated in FIG. 4, seawater is introduced from each of a plurality of nozzles 24(1) to 24(a) to corresponding ones of the mist-forming structure 16(1) to 16(4) at an appropriate flow rate. In accordance with the present invention, it is preferable to determine the number of mist-forming structure 16 to be installed, based on the flow rate of seawater to be introduced into the freshwater producing apparatus 100.

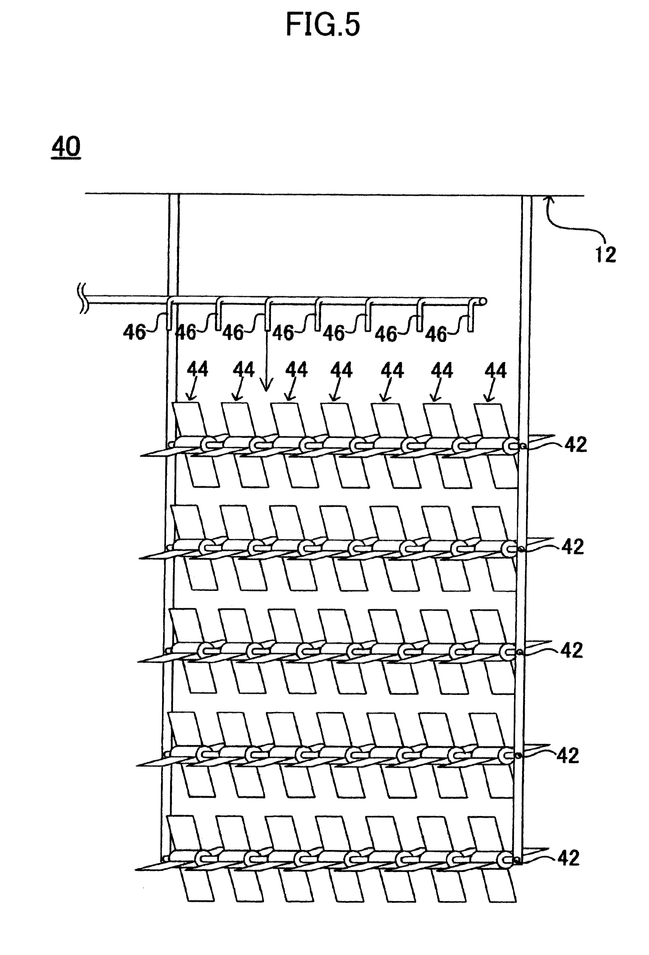

The mist-forming structure in the present invention is not limited to the type where the rotary shaft of the rotors extends in the vertical direction as in the mist-forming structure 16 illustrated in FIG. 1, but it may be possible to adopt a type where the rotary shaft of the rotors extends in a horizontal direction as shown in FIG. 5. The mist-forming structure 40 illustrated in FIG. 5 is configured such that a plurality of impellers 44 are attached, in side-by-side relation, to each of five rotary shafts 42 which are hung down from the top of the housing 12 to be supported thereby, wherein seawater is introduced from a plurality of nozzles 46 positioned correspondingly to the respective impellers 44.

From the above description, it is understood that the mist-forming structure in the present invention encompasses any configuration capable of pulverizing falling seawater by means of collision impact and scattering the pulverized seawater in air in the form of fine mist-like water droplets.

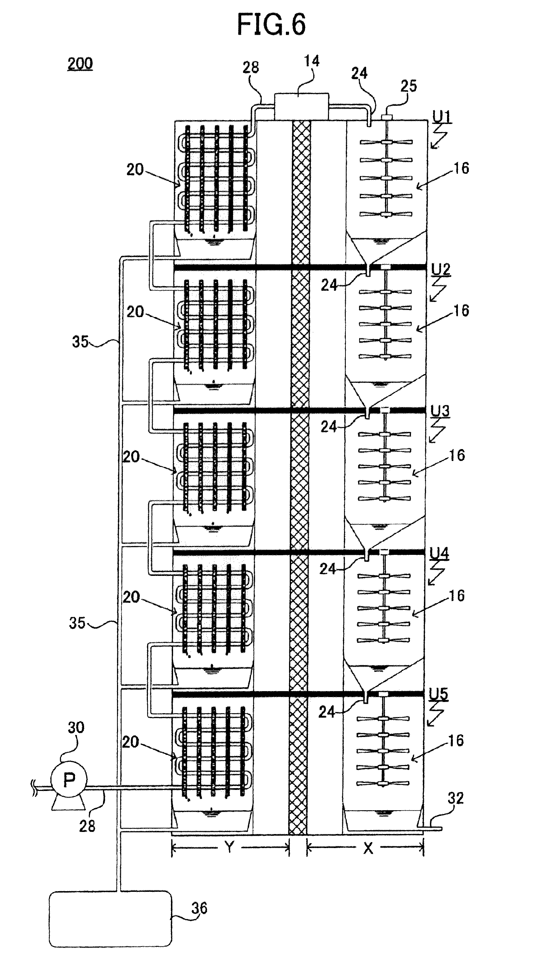

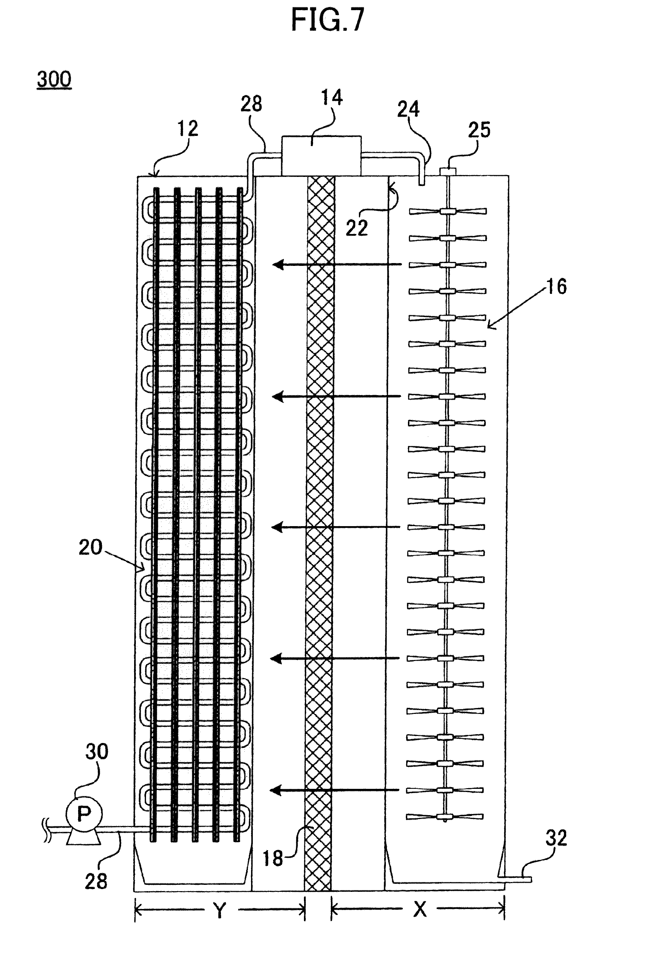

While the present invention has been described based on the freshwater producing apparatus according to the first embodiment, the freshwater producing apparatus of the present invention can readily be implemented in a multi-stage system which is advantageous in terms of heat efficiency by providing a plurality of the structures in the vertical direction. With reference to FIGS. 6 and 7, this embodiment will be described below.

FIG. 6 illustrates a freshwater producing apparatus 200 extended in a vertical direction. The freshwater producing apparatus 200 can be readily established by connecting, in the vertical direction, a plurality of units each having the basic configuration of the freshwater producing apparatus 100 described with reference to FIGS. 1 to 5. The present invention is not intended to be limited to the direction of connecting the units. For example, the units may be arranged in side-by-side relation in the horizontal direction. However, in view of structural simplification of the apparatus, it is preferable to connect the units in the vertical direction.

In the second embodiment illustrated in FIG. 6, five units designated by the characters U1 to U5 are arranged and connected to each other in the vertical direction. Specifically, the outlet and the inlet of the radiators 20 of the condensation sections Y in adjacent ones of the units are connected to each other, and the bottom of the evaporation section X and the nozzle 24 in respective ones of the adjacent units are connected to each other.

Seawater pumped up by the pumping device 30 is firstly introduced into the unit U5, and passed through the pipes 28 arranged inside respective ones of the radiators 20 of the unit U4, the unit U3, the unit U2 and the unit U1 in this order, vertically from the lower side to the upper side of the apparatus, to be introduced into the heating device 14. The seawater introduced in the heating device 14 is heated up to a given temperature, and then introduced from the nozzle 24 into the evaporation section X of the unit U1. A part of the seawater introduced in the unit U1 is atomized into mist by the mist-forming structure 16 of the unit U1 while a part of the mist is evaporated, and the portion of the mist which has not been evaporated and the portion of the seawater which has not been atomized into mist are caused to directly fall in a vertically downward direction and reach the bottom of the unit U1. The seawater reaching the bottom of the unit U1 is introduced into the unit U2 connected beneath the unit U1. A part of the introduced seawater is atomized into mist by the mist-forming structure 16 of the unit U2, and the remaining seawater reaches the bottom of the unit U2. Subsequently, the seawater reaching the bottom of the unit U2 is sequentially introduced into the unit U3, the unit U4 and the unit U5, to generate water vapor in each of the units, in the same manner as described above. The seawater which has not been treated finally reaches the bottom of the unit U5 and discharged from the water discharge pipe 32 outside the apparatus.

Water vapor generated in each of the units U1 to U5 is introduced into the condensation section Y of the unit via a demister 18, and condensed and liquidized by the radiator 20 of each unit. The produced freshwater is accumulated on the bottom of each of the units, and then collected to a freshwater reservoir tank 36 via a pipe 35. As above, the second embodiment where a plurality of units each having the basic configuration of the freshwater producing apparatus 100 described with reference to FIGS. 1 to 5 are connected to each other in the vertical direction, has been described with reference to FIG. 6. As another example of modification, a third embodiment of the present invention will be described below, with reference to FIG. 7.

FIG. 7 illustrates a freshwater producing apparatus 300 having an arrangement extending in a vertical direction. The freshwater producing apparatus 300 provides a system which accomplishes advantageous results in terms of heat efficiency as with the freshwater producing apparatus 200 illustrated in FIG. 6, by simply extending the structure of the freshwater producing apparatus 100 described with reference to FIGS. 1 to 5, in the vertical direction, instead of connecting the plurality of units in the vertical direction as in the freshwater producing apparatus 200.

As shown in FIG. 7, the evaporation section X and the condensation section Y are defined inside a single housing 12 of the freshwater producing apparatus 300 which is configured as a continuous space having a sufficient long dimension. In the freshwater producing apparatus 300, seawater pumped up by the pumping device 30 is forcedly sent in a vertically upward direction through a pipe 28 arranged in a radiator 20, and introduced into a heating device 14 installed on the top of the housing 12. The seawater introduced in the heating device 14 is heated up to a given temperature, and then introduced from a nozzle 24 into the evaporation section X.

In the freshwater producing apparatus 300, the evaporation section X has a sufficient lengthwise dimension, and the mist-forming structure 16 resides in the housing in such a manner that it continuously extends from the top to the bottom of the housing 12 in the lengthwise direction. A part of the seawater introduced from the nozzle 24 to the uppermost portion of the mist-forming structure 16 is atomized into mist, and the portion of the seawater which has not been atomized falls within the evaporation section X, while having a possibility to be atomized by a lower portion of the mist-forming structure 16. The portions of the mist and seawater which have not been evaporated until they reach the bottom of the evaporation section X, are discharged from the water discharge pipe 32 outside the housing.

A part of the mist is evaporated into water vapor at respective positions between the upper region and the lower region of the internal space of the evaporation section X. The water vapor generated at the respective positions is carried in the airstream generated by airstream-forming means (not shown), from the respective positions of the places where the water vapor has been generated in the evaporation section X to the condensation section Y as indicated by the arrowed lines in FIG. 7, in the circumferential direction. The water vapor introduced into the condensation section Y is condensed and liquidized at a portion of the radiator 20 located in the circumferential direction with respect to each of the positions where the water vapor has been generated in the evaporation section X. The freshwater produced in the above manner falls along wall surfaces of the radial fins of the radiator 20 in a vertically downward direction, and is finally accumulated in the bottom of the condensation section Y.

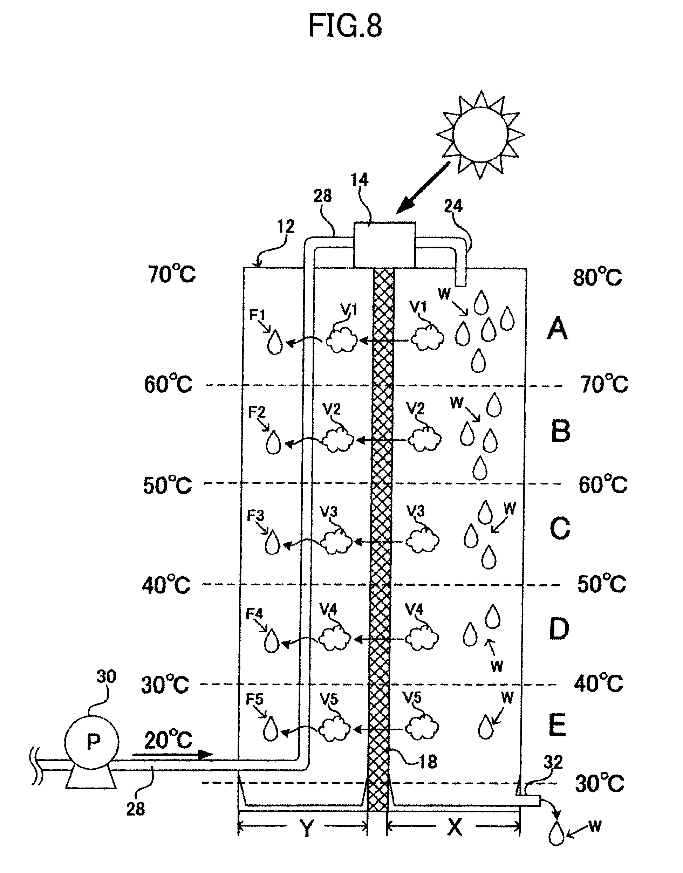

With reference to the conceptual diagram illustrated in FIG. 8, the following description will be made about the fact that thermal efficiency is significantly improved in the freshwater producing apparatuses 200, 300 according to the second and third embodiments. In FIG. 8, the mist-forming structure and the heat exchanger are omitted, and the internal space of the housing 12 is divided into five layers consisting of a layer A, a layer B, a layer C, a layer D and a layer E which are arranged in downward direction in this order, for the sake of convenience of illustration. As for the freshwater producing apparatus 200, it should be understood that in FIG. 8 that the layers A to E corresponds to respective ones of the units U1 to U5. As for the freshwater producing apparatus 300, it should be noted in FIG. 8 that the layers A to E are regions defined by virtually dividing the continuous internal space of the housing 12.

Based on the conceptual diagram illustrated in FIG. 8, a process of producing freshwater will be described using virtual values (temperature values). Firstly, low-temperature seawater (20°C) is pumped up from the sea and introduced into the freshwater producing apparatus 200 by the pumping device 30. The seawater introduced in the freshwater producing apparatus 200 is introduced into the heating device 14 installed on the top of the housing 12, via the pipe 28 arranged inside the condensation section Y in the vertically upward direction. If an initial temperature of seawater to be introduced into the evaporation section X is set to 80°C, the heating device 14 is required to heat seawater from 20°C up to 80°C in an initial stage of starting the apparatus.

Then, the seawater heated up to 80°C is introduced from the nozzle 24 into the evaporation section X of the layer A. A part of the seawater W introduced into the layer A is atomized into a mist, and a part of the mist is formed into water vapor V1 in the course of passing through the layer A. The generated water vapor V1 is moved from the evaporation section X to the condensation section Y in the same layer A, through the demister 18 together with the airstream formed by the airstream-forming device (not illustrated). On the other hand, the portion of the seawater W which has not been evaporated (including the mist: the same applies to the following description) in the layer A, has a temperature which may be decreased to 70°C due to drawing of heat by latent heat of evaporation of the water vapor V1, and introduced into the layer B.

A part of the seawater W introduced in the layer B is atomized into mist, and a part of the mist is evaporated into water vapor V2 in the course of passing through the layer B. The generated water vapor V2 is moved from the evaporation section X to the condensation section Y in the same layer B, in the same manner as described above. On the other hand, the portion of the seawater W which has not been evaporated in the layer B may have a temperature decreased to 60°C due to drawing of heat by latent heat of evaporation of the water vapor V2, and introduced into the layer C.

A part of the seawater W introduced in the layer C is atomized into mist, and a part of the mist is evaporated into water vapor V3 in the course of passing through the layer C. The generated water vapor V3 is moved from the evaporation section X to the condensation section Y in the same layer C, in the same manner as described above. On the other hand, the portion of the seawater W which has not been evaporated in the layer C may have a temperature decreased to 50°C due to drawing of heat by latent heat of evaporation of the water vapor V3, and introduced into the layer D.

A part of the seawater W introduced in the layer D is atomized into mist, and a part of the mist is evaporated into water vapor V4 in the course of passing through the layer D. The generated water vapor V4 is moved from the evaporation section X to the condensation section Y in the same layer D, in the same manner as described above. On the other hand, the portion of the seawater W which has not been evaporated in the layer D may have a temperature decreased to 40°C due to drawing of heat by latent heat of evaporation of the water vapor V4, and introduced into the layer E.

A part of the seawater W introduced in the layer E is atomized into mist, and a part of the mist is evaporated into water vapor V5 in the course of passing through the layer E. The generated water vapor V5 is moved from the evaporation section X to the condensation section Y in the same layer E, in the same manner as described above. On the other hand, the portion of the seawater W which has not been evaporated in the layer E may have a temperature decreased to 30°C due to drawing of heat by latent heat of evaporation of the water vapor V5, and finally discharged from the water discharge pipe 32.

The water vapor V5 moved from the evaporation section X to the condensation section Y in the layer E is condensed into freshwater F5 through a heat exchange with the seawater passing through the pipe 28, via the radiator (not shown). The seawater (20°C) passing through the pipe 28 is increased in temperature up to 30°C in the course of passing through the layer E, by receiving latent heat of condensation of the water vapor V5, and then flows into the layer D.

The water vapor V4 moved from the evaporation section X to the condensation section Y in the layer D is condensed into freshwater F4 through a heat exchange with the seawater passing through the pipe 28, in the same manner as described above. The seawater passing through the pipe 28 is increased in temperature up to 40°C in the course of passing through the layer D, by receiving latent heat of condensation of the water vapor V4, and then flows into the layer C.

The water vapor V3 moved from the evaporation section X to the condensation section Y in the layer C is condensed into freshwater F3 through a heat exchange with the seawater passing through the pipe 28, in the same manner as described above. The seawater passing through the pipe 28 is increased in temperature up to 50°C in the course of passing through the layer C, by receiving latent heat of condensation of the water vapor V3, and then flows into the layer B.

The water vapor V2 moved from the evaporation section X to the condensation section Y in the layer B is condensed into freshwater F2 through a heat exchange with the seawater passing through the pipe 28, in the same manner as described above. The seawater passing through the pipe 28 is increased in temperature up to 60°C in the course of passing through the layer B, by receiving latent heat of condensation of the water vapor V2, and then flows into the layer A.

The water vapor V1 moved from the evaporation section X to the condensation section Y in the layer A is condensed into freshwater F1 through a heat exchange with the seawater passing through the pipe 28, in the same manner as described above. The seawater passing through the pipe 28 is increased in temperature up to 70°C in the course of passing through the layer A, by receiving latent heat of condensation of the water vapor V1, and, in this state, forcedly sent and introduced from the housing 12 into the heating device 14.

As described above, the low-temperature seawater (20°C) pumped up from the sea by the pumping device 30 is gradually heated in the course of being forcedly sent through the condensation section Y in the vertically upward direction, by receiving the latent heat of condensation of the vapor sequentially moved from the evaporation section X in the circumferential direction, and the temperature of the seawater is increased up to 70°C, just before it is introduced into the heating device 14. Thus, although it is necessary to heat the seawater from 20°C up to 80°C by the heating device 14 only in the initial stage of starting of the apparatus, the heating device 14 is simply required to heat the seawater from 70°C up to 80°C during the subsequent continuous operation, so that there is no need for excessive energy for the heating, which makes it possible to sufficiently maintain the operation of the apparatus, for example, even if a heat-collecting device based on solar light is employed as the heating device 14.

The freshwater producing apparatus of the present invention can be constructed as a seawater condensing apparatus simply by adding conventional cooling means thereto. In this case, in order to allow the seawater to be circulated between the evaporation section X and the condensation section Y, the lowermost region of the evaporation section X is connected with the inlet of the radiator of the condensation section Y located in the lowermost region thereof, through conventional cooling means, so as to allow the seawater reaching the lowermost region of the evaporation section X to be cooled and then introduced into the radiator of the condensation section Y again. Taking FIG. 8 as an example, the seawater (30°C) discharged from the water discharge pipe 32 is cooled to 20°C by the cooling means, and then introduced into the condensation section Y. This cycle is repeated to circulate the seawater within the apparatus. During repetition of the cycle, water in the seawater is repeatedly evaporated and removed to gradually increase an enrichment level. Finally, it becomes possible to collect condensed seawater having a level of condensation increased to the utmost limit in the above manner, and a desired component or components (sodium, potassium, magnesium, etc.) can be extracted from the condensed seawater.

As described above, the freshwater producing apparatus of the present invention employs a simple apparatus configuration, and has no need for a complicated element such as a depressurization chamber, so that it can be constructed at a low installation cost while reducing a maintenance cost thereof. In addition, the freshwater producing apparatus of the present invention can be readily formed in a multi-stage system to enhance heat efficiency, so that it can be sufficiently operated even based on natural energy such as solar energy.

### EXAMPLES

Although the freshwater producing apparatus of the present invention will be more specifically described based on examples, it should be understood that the present invention should not be interpreted as being limited to the following examples.

### (Example 1)

A freshwater producing apparatus was fabricated in accordance with the embodiment illustrated in FIG. 1. Specifically, a cylindrical-shaped housing 12 having a diameter of about 800 mm and a height dimension of about 200 mm was provided. Further, a mist-forming structure 16 was provided by arranging two rotors each comprising sixteen blades 16b and having a diameter of about 70 mm, in side-by-side relation, and a single piece of the mist-forming structure was installed in an evaporation section X.

In the Example 1, black raw water containing India ink dispersed in water was prepared as the water to be treated, and a test was carried out in the following manner. The above freshwater producing apparatus was operated for one hour under a condition that, after forcedly sending the treatment water having a temperature of 15°C from the inlet of the radiator 20 at a flow rate of 6 L/min, and heating the treatment water sent out of the outlet of the radiator 20 by a heating device 14 up to 60°C, the treatment water is injected to the mist-forming structure 16 at a flow rate of 6 L/min. As a result, 4181 mL of pellucid water was obtained. During the operation under the above condition, a thermometer was installed at the outlet of the radiator 20 which indicated a temperature about 25°C.

### (Example 2)

A freshwater producing apparatus having an air blower in place of a reflecting plate 26 was fabricated in accordance with the embodiment illustrated in FIG. 3. Other conditions were the same as those in Example 1. As a result of operation for one hour, 6002 mL of pellucid water was obtained

### (Example 3)

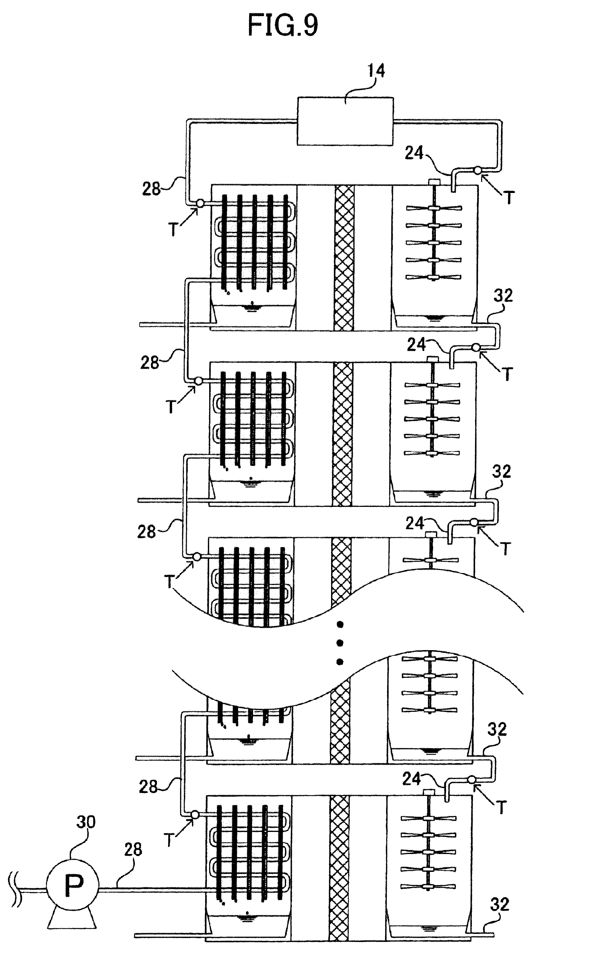

As for the freshwater producing apparatus of the present invention, heat efficiency in the case of expanding it in a vertical direction was verified. In Example 3, a test was carried out under a condition that a plurality of units each consisting of the freshwater producing apparatus fabricated in Example 2 are connected to each other in accordance with the embodiment illustrated in FIG. 6, and operated the plurality of the units in the same manner as that in the embodiment illustrated in FIG. 9,. Specifically, the outlet and the inlet of respective radiators 20 of adjacent ones of the units were connected to each other by a vinyl hose, and the outlet of the radiator 20 of the downstream most one of the unit when viewed from the side of introduction of treatment target water is connected to the heating device 20. Further, the heating device 14 was connected to the nozzle 24 of the downstreammost unit, and the water discharge pipe 32 and the nozzle 24 of respective adjacent ones of the units were connected to each other by a vinyl hose. In this manner, six units at a maximum were connected to each other.

The above freshwater producing apparatus was operated under a condition that, after forcedly sending the treatment water having a temperature of 20°C from the inlet of the radiator 20 of the upstreammost one of the units at a flow rate of 6 L/min, and heating the treatment water sent out of the outlet of the radiator 20 of the downstream most unit by the heating device 14 up to 80°C, the treatment water is injected to the mist-forming structure 16 at a flow rate of 6 L/min. During the operation, temperature was measured by thermometers T installed at the outlet of the radiator 20 and at a position just before the nozzle 24 in each of the units. Further, after termination of the operation, freshwater accumulated on respective bottoms of the units was entirely collected to measure the total amount of the freshwater.

The following Table shows measurement values of the thermometers T installed at the outlet of the radiator 20 and at the position just before the nozzle 24 in each of the units. In the following Table, the unit to which the treatment water is initially introduced is denoted as a unit No. 1, and other units were denoted as No. 2 to No. 6 in order of connection.

**[TABLE 1]**

| | No. 1 | No. 2 | No. 3 | No. 4 | No. 5 | No. 6 |
|---|---|---|---|---|---|---|
| Radiator side | 24.1°C | 27.1°C | 32.8°C | 35.0°C | 43.4°C | 54.7°C |
| Nozzle side | 42.5°C | 44.5°C | 47.4°C | 59.8°C | 65.2°C | 80.1°C |

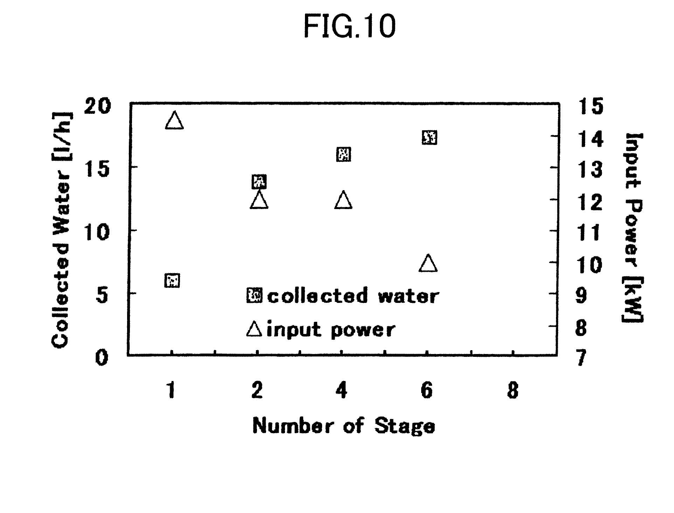

FIG. 10 shows the relationship between respective ones of the number of connected units, the amount (L/h) of water obtained per unit time, and the electric power consumed by the heating device 14. As shown in FIG. 10, the amount of water obtained per unit time in the operation with a single unit was 6 L/h, whereas the amounts of water obtained per unit time in the operation of two connected units, in the operation of four connected units, and in the operation of six connected units, were 14 L/h, 16 L/h, and 18 L/h, respectively.

Further, electric power consumed during the operation (i.e., electric power consumed by the heating device 14) in the operation of a single unit was 19 KW, whereas electric power consumption was reduced along with an increase in the number of connected units, and electric power consumption in the operation of six connected units was 10 KW. It was thus verified that, although an amount of water obtained per unit time in the operation of six connected units is increased to three times as compared with the operation of a single unit, electric power consumption is reduced to about one-half as compared with the operation of a single unit.

### BRIEF DESCRIPTION OF THE DRAWINGS

FIG. 1 is a diagram showing a freshwater producing apparatus according to one embodiment of the present invention.
FIG. 2 is a conceptual diagram for explaining a mechanism for producing freshwater in the freshwater producing apparatus according to the embodiment.
FIG. 3 is a diagram showing a freshwater producing apparatus having an air blower provided behind the mist-forming structure.
FIG. 4 is a diagram showing a freshwater producing apparatus provided with a plurality of mist-forming structures.
FIG. 5 is a diagram showing the mist-forming structure in which a rotary shaft of a rotor is disposed to extend in a horizontal direction.
FIG. 6 is a diagram showing a freshwater producing apparatus expanded by connecting a plurality of units in a vertical direction.
FIG. 7 is a diagram showing a freshwater producing apparatus expanded by extending it in a vertical direction.
FIG. 8 is an conceptual diagram for explaining a mechanism for allowing heat efficiency of the apparatus to be improved.
FIG. 9 is a diagram showing a test apparatus.
FIG. 10 is a graph showing a relationship between respective ones of the number of connected units, an amount (L/h) of water obtained per unit time, and electric power consumed by a heating device.

### [EXPLANATION OF CODES]

100, 200, 300: freshwater producing apparatus
12: housing
14: heating device
16: mist-forming structure
18: demister
20: radiator
22: pillar
24: nozzle
25: rotational driving source
26: reflecting plate
28: pipe
30: pumping device
32: water discharge pipe
34: air blower
35: pipe
36: freshwater reservoir tank
40: mist-forming structure
42: rotary shaft
44: impeller
46: nozzle

## Claims

1. A freshwater producing apparatus comprising:
heating means for heating raw water as a subject to be treated;
an evaporation section including at least one mist-forming structure for atomizing the raw water introduced from the heating means into mist;
a condensation section arranged in side-by-side relation to the evaporation section through a demister, and including a heat exchanger for condensing water vapor generated in the evaporation section; and
airstream-forming means for forming an airstream directed from the evaporation section to the condensation section,
wherein the raw water as the treatment target is introduced into the heating means via the heat exchanger.

2. The freshwater producing apparatus as defined in claim 1, wherein the mist-forming structure is means to pulverize the introduced raw water by means of a collision impact, and scatter the pulverized water as water droplets.

3. The freshwater producing apparatus as defined in claim 2, wherein the mist-forming means is formed as a rotor comprising a plurality of collision members each formed to extend radially from a rotary shaft.

4. The freshwater producing apparatus as defined in claim 3, wherein the rotor is formed in a turbine-like shape, and adapted to be rotated by a dynamic pressure of the introduced raw water.

5. The freshwater producing apparatus as defined in any one of claims 1 to 4, wherein the airstream-forming means is a reflecting plate adapted to block the water droplets scattered from the mist-forming structure to induce a mist flow directed from the evaporation section to the condensation section.

6. The freshwater producing apparatus as defined in any one of claims 1 to 4, wherein the airstream-forming means is an air blower.

7. The freshwater producing apparatus as defined in any one of claims 1 to 6, wherein the evaporation section and the condensation section are arranged in side-by-side relation in a circumferential direction of a doughnut-shaped space defined within a cylindrical-shaped housing provided to stand in a vertical direction.

8. The freshwater producing apparatus as defined in any one of claims 1 to 7, wherein the heat exchanger is adapted to allow the raw water to flow therethrough vertically from a lower side to an upper side thereof.

9. The freshwater producing apparatus as defined in any one of claims 1 to 8, which has a structure extended in a vertical direction.

10. A freshwater producing apparatus comprising a plurality of housings connected to each other in a vertical direction, each of the housings includes:
an evaporation section having at least one mist-forming structure for atomizing raw water as a treatment target;
a condensation section arranged in side-by-side relation to the evaporation section through a demister, and having a heat exchanger for condensing water vapor generated in the evaporation section; and
airstream-forming means for forming an airstream directed from the evaporation section to the condensation section,
wherein the freshwater producing apparatus is configured such that:
the heat exchangers of the housings are connected to each other to allow the raw water to flow therethrough in a vertical upward direction;
an un-evaporated portion of the raw water in the evaporation section of each of the housings is introduced into the evaporation section of one of the remaining housings connected just therebelow; and
the raw water is introduced into the heat exchanger of a lowermost one of the housings, and, after being introduced into and heated by heating means provided on a top oblower uppermost one of the housings via the heat exchangers of the housings, introduced into the evaporation section of the uppermost housing.

11. The freshwater producing apparatus as defined in claim 10, wherein the mist-forming structure is formed as a plurality of rotors each comprising a plurality of collision members each formed to extend radially from a rotary shaft extending in a vertically downward direction, the rotors being attached to the rotary shaft in side-by-side relation.

12. The freshwater producing apparatus as defined in claim 10 or 11, wherein each of the housings is a cylindrical-shaped housing, and wherein the evaporation section and the condensation section are arranged in side-by-side relation in a circumferential direction of a doughnut-shaped space defined within the housing.

13. The freshwater producing apparatus as defined in any one of claims 1 to 12, wherein the heating means is heat-collecting means based on solar light energy.

14. An enrichment apparatus formed by adding cooling means to the freshwater producing apparatus as defined in any one of claims 1 to 13, the enrichment apparatus being configured such that the raw water reaching a lowermost region of the evaporation section is cooled by the cooling means, and then introduced from an inlet of the heat exchanger located in a lowermost region thereof, whereafter the raw water is allowed to be circulated between the evaporation section and the condensation section.
